# EUROPÄISCHE PATENTSCHRIFT

(11) **EP 1 004 011 B1**
(45) Veröffentlichungstag und Bekanntmachung des Hinweises auf die Patenterteilung: **05.12.2001**
(21) Anmeldenummer: 98937448.3
(22) Anmeldetag: 05.06.1998
(51) Int. Cl.: G01M 3/20

(54) **VERFAHREN ZUM BETRIEB EINES HELIUMLECKSUCHERS UND FÜR DIE DURCHFÜHRUNG DIESES VERFAHRENS GEEIGNETER HELIUMLECKSUCHER**
METHOD FOR OPERATING A HELIUM LEAK INDICATOR AND THE APPLICATION OF THIS METHOD TO HELIUM LEAK INDICATORS
PROCEDE DE FONCTIONNEMENT D'UN DISPOSITIF DE DETECTION DE FUITES D'HELIUM ET DISPOSITIF DE DETECTION ADAPTE POUR LA MISE EN OEUVRE DUDIT PROCEDE

(30) Priorität: 14.08.1997 DE 19735250
(43) Veröffentlichungstag der Anmeldung: 31.05.2000
(73) Patentinhaber: Leybold Vakuum GmbH, 50968 Köln (DE)
(72) Erfinder: BÖHM, Thomas, D-50859 Köln (DE); WIDT, Rudi, D-50969 Köln (DE)
(74) Vertreter: Leineweber, Jürgen, Dipl.-Phys.
(86) Internationale Anmeldenummer: EP9803363
(87) Internationale Veröffentlichungsnummer: WO9909387

(56) Entgegenhaltungen:
- DE-A1- 4 408 877

## Beschreibung

Die Erfindung bezieht sich auf ein Verfahren zum Betrieb eines Heliumlecksuchers mit den Merkmalen des Oberbegriffes des Patentanspruchs 1. Außerdem bezieht sich die Erfindung auf einen für die Durchführung dieses Verfahrens geeigneten Heliumlecksucher.

Bei der Heliumlecksuche kann durch eine Verringerung des Saugvermögens der Vakuumpumpen die Nachweisgrenze verbessert werden. Zur Reduzierung des Saugvermögens ist es bekannt, zuschaltbare Drosseln zu verwenden oder die Vorvakuumpumpe abzukoppeln. In beiden Fällen wird das Saugvermögen stufenweise verringert bzw. die Empfindlichkeitszunahme stufenweise erhöht. Erkauft wird eine solche Empfindlichkeitszunahme mit längeren Messzeiten, da diese mit einer Verringerung des Saugvermögens der Vakuumpumpen zunehmen.

Der vorliegenden Erfindung liegt die Aufgabe zugrunde, bei einem Verfahren zum Betrieb eines Heliumlecksuchers der hier betroffenen Art die Einflussnahme auf das Saugvermögen und damit auf die Nachweisgrenze der Leckmessungen zu vereinfachen, um Messungen mit hoher Empfindlichkeit in optimal kurzer Zeit durchführen zu können. Außerdem soll eine stufenlose Veränderung der Nachweisgrenze ermöglicht werden.

Erfindungsgemäß werden diese Ziele mit Hilfe der Merkmale der Patentansprüche 1,10 erreicht.

Die Erfindung erlaubt es, mit Hilfe einer Veränderung der Modulationseigenschaften des auf das Vorhandensein von Testgas zu untersuchenden Gasstromes Einfluss auf das effektive Saugvermögen der Vakuumpumpen und damit auf die Empfindlichkeit der Lecksuche zu nehmen. Dem Anwender ist es dadurch möglich, die Nachweisgrenze an die jeweils gewünschte Applikation anzupassen, indem er bestimmte Modulationseigenschaften einstellt. Diese Anpassung erlaubt es, jeweils mit optimal kurzen Messzeiten zu arbeiten. Da die Beeinflussung des Saugvermögens entsprechend der Erfindung mit Hilfe des modulierbaren Einlassventiles erfolgt, sind besondere Maßnahmen zur Veränderung des Saugvermögens an den Vakuumpumpen selbst nicht mehr erforderlich.

Ein zweckmäßiges, durch die Erfindung möglich gewordenes Betriebsverfahren besteht darin, dass die Nachweisgrenze während eines Leckmessvorganges automatisch bis zu einer unteren Grenze verändert werden kann. Als Stellgröße kann das vom Massenspektrometer gelieferte Signal verwendet werden, dessen Größe bei noch nicht registriertem Leck vom Heliumuntergrund im zu untersuchenden Gasstrom abhängt und mit zunehmender Messzeit kleiner wird. Solange eine vorgegebene Signalgröße nicht unterschritten wird, werden die Modulationseigenschaften nicht verändert und ein relativ hohes Saugvermögen beibehalten. Unterschreitet die Signalgröße eine vorgegebene Grenze, wird durch Veränderung der Modulationseigenschaften das Saugvermögen reduziert und damit die Empfindlichkeit erhöht. Jede in dieser Weise durchgeführte Leckfeststellung und
-messung kann deshalb innerhalb einer optimal kurzen Messzeit durchgeführt werden.

Weitere Vorteile und Einzelheiten der Erfindung sollen an Hand der Figuren 1 bis 4 erläutert werden. Es zeigen
- Figuren 1 und 2 schematisch dargestellte Ausführungsbeispiele für Heliumlecksucher nach der Erfindung und
- Figuren 3 und 4 Diagramme zur Erläuterung von Modulationseigenschaften.

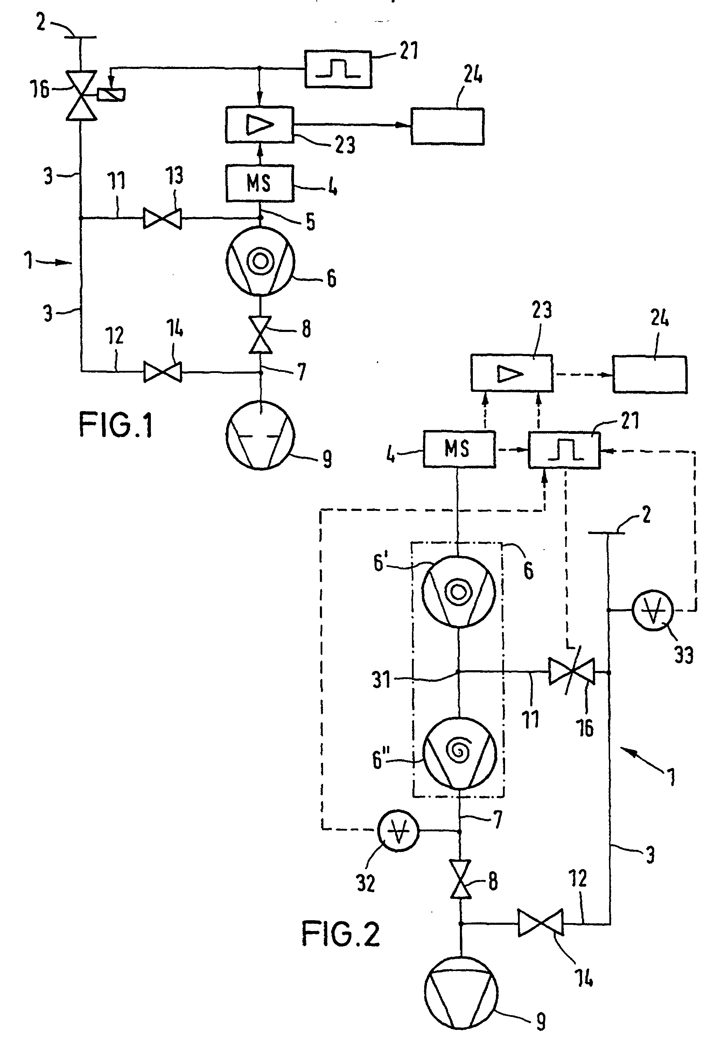

Beim Heliumlecksucher 1 nach Figur 1 sind der Einlass mit 2, die sich an den Einlass 2 anschließende Leitung mit 3 und der als Massenspektrometer ausgebildete Testgasdetektor mit 4 bezeichnet. An den Einlass des Massenspektrometers 4 ist über die Leitung 5 die Hochvakuumpumpe 6 (vorzugsweise eine Turbomolekularvakuumpumpe) angeschlossen. An den Auslass der Hochvakuumpumpe 6 schliesst sich die Leitung 7 mit dem Ventil 8 an, welche mit dem Einlass der Vorvakuumpumpe 9 in Verbindung steht. An die Leitung 3 sind die Leitungsabschnitte 11, 12 mit den Ventilen 13, 14 angeschlossen. Über die Leitungen 11, 12 gelangt das in den Einlass 2 eintretende Gas entweder unmittelbar (Leitung 11) oder mittelbar (Leitung 12) in das Massenspektrometer 4. Die Auswahl des Gasweges erfolgt mit Hilfe der Ventile 13, 14. Sind die Ventile 8 und 13 geschlossen, kann bei offenem Ventil 14 die Vorvakuumpumpe 9 der Evakuierung des Prüflings oder der Prüfkammer (nicht dargestellt) dienen, welche vor dem Beginn der Lecksuche mit dem Einlass 2 verbunden werden.

Um den erfindungsgemäßen Betrieb des Heliumlecksuchers 1 zu ermöglichen, befindet sich in der Leitung 3 ein Bauteil (Ventil 16), das eine Modulation des hindurchtretenden Gasstromes ermöglicht. Der Öffnungsquerschnitt bzw. Leitwert des Ventils 16 ist veränderbar. Einzelheiten über Modulationen dieser Art sind an sich bekannt aus der DE-A-44 08 877.

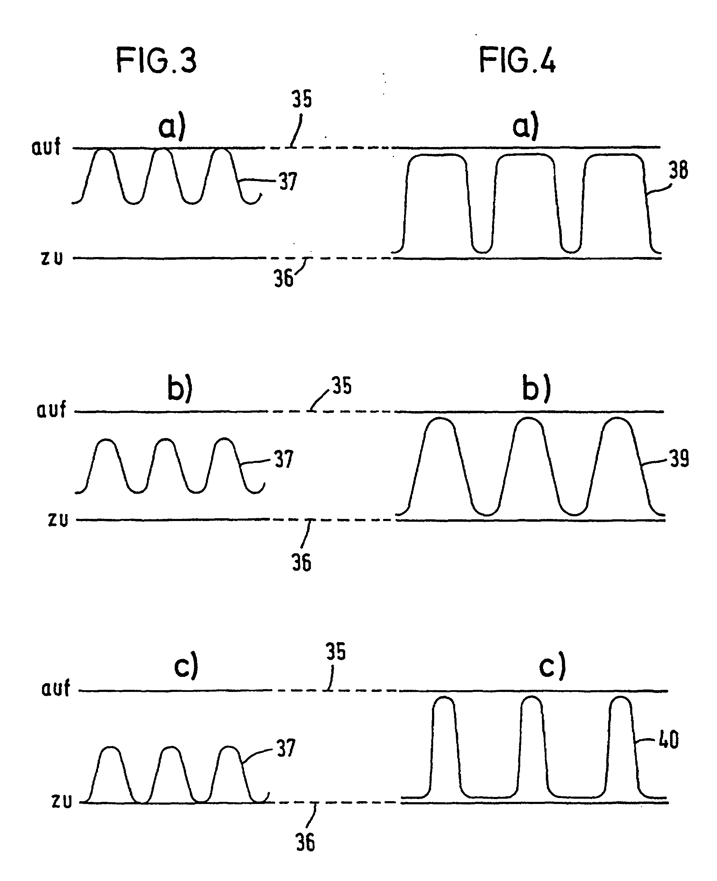

Zur Betätigung des Ventils 16, das vorzugsweise ein elektrisch aussteuerbares Proportionalventil ist, ist ein Steuergerät 21 vorgesehen. Bestandteil dieses Steuergerätes ist ein Impulsgenerator. Entsprechend der gewählten Pulsform verändert sich der Leitwert des Ventils 16. Die Form der Impulse ist derart einstellbar, dass zum einen die gewünschte Modulation des durch das Ventil hindurchtretenden Gasstromes und zum anderen Einfluss auf die mittlere Öffnungszeit bzw. auf den mittleren Leitwert des Ventiles 16 genommen werden kann. An Hand der Figuren 3 bis 4 werden Ausführungsbeispiele dafür erläutert.

Das vom Steuergerät 21 abgegebene Signal wird außerdem einem Verstärker 23 als Referenzsignal zugeführt. Der Verstärker 23 dient der Verarbeitung der vom Massenspektrometer gelieferten Signale. Nach einer Verstärkung und phasenempfindlichen Gleichrichtung entsprechend dem LOCK-IN-Prinzip erfolgt die Signalanzeige. Als Signalanzeige ist der Block 24 dargestellt.

Das Ausführungsbeispiel nach Figur 2 entspricht im wesentlichen dem Ausführungsbeispiel nach Figur 1. Unterschiede bzw. Ergänzungen sind:
- Die Hochvakuumpumpe 6 ist eine zweitstufige Reibungsvakuumpumpe mit einer hochvakuumseitig angeordneten Turbomolekularpumpenstufe 6' und einer vorvakuumseitig angeordneten Spiralpumpenstufe 6''.
- Zwischen den genannten Pumpenstufen befindet sich ein Zwischenanschluss 31, an den die Leitung 11 angeschlossen ist.
- An Stelle des Ventils 13 ist in der Leitung 11 das Ventil 16 angeordnet.
- Die Vorvakuumpumpe 9 ist eine Membranvakuumpumpe.
- Zur Ansteuerung des Ventils 16 während des Abpumpvorgangs und mittelbaren Überwachung des Drucks im Massenspektrometer 4 ist ein Druckmessgerät 32 vorgesehen, dessen Signale dem Steuergerät 21 zuge-führt werden.
- Zur Überwachung des Druckes im Bereich des Einlasses 2 des Heliumlecksuchers 1 ist ein weiteres Druckmessgerät 33 vorgesehen, dessen Signale ebenfalls dem Steuergerät 21 zugeführt werden.

Die Figuren 3 und 4 zeigen Möglichkeiten für die Wahl von Modulationen mit solchen Eigenschaften, dass mit ihnen Einfluss auf den mittleren Leitwert des Ventiles 16 genommen werden kann. In jeder der Figuren 3a bis 3c und 4a bis 4c sind zwei horizontale Linien eingezeichnet, die dem Ventilzustand "auf" (Linie 35) und "zu" (Linie 36) entsprechen.

Bei der Modulation nach den Figuren 3a bis 3c liefert der Impulsgenerator ein periodisch sich veränderndes Signal mit gleichbleibender Frequenz und gleichbleibender Amplitude. Die Amplitude entspricht etwa dem halben Abstand der Linien 35, 36. Die Lage der in ihrer Form identischen Kurven 37 ist in den Figuren 3a bis 3c unterschiedlich. Bei Modulationseigenschaften entsprechend Figur 3a ändert sich der Öffnungsquerschnitt des Ventiles 16 periodisch zwischen halb offen und völlig offen. Bei Modulationseigenschaften gemäß Figur 3c ändert sich der Öffnungsquerschnitt periodisch zwischen geschlossen und halb offen. Bei Modulationseigenschaften gemäss Figur 3b ändert sich der Öffnungsquerschnitt des Ventils 16 periodisch zwischen etwa ein viertel offen und drei viertel offen. Es ist ersichtlich, dass bei den in den Figuren 3a und 3c dargestellten Zuständen der mittlere (zeitlich gemittelte) Öffnungsquerschnitt des Ventils 16 unterschiedlich ist. Bei der Modulation der Figur 3a ist der mittlere Öffnungsquerschnitt und damit das effektive Saugvermögen der Vakuumpumpe (n) relativ groß. Daraus ergibt sich eine relativ geringe Empfindlichkeit der Lecksuche. Durch Veränderung der Modulationseigenschaften entsprechend der Figur 3b (mittleres Saugvermögen) und 3c (geringes Saugvermögen) wird die Empfindlichkeit der Lecksuche gesteigert.

Bei Modulationseigenschaften entsprechend den in den Figuren 4a bis 4c dargestellten Kurven 38, 39, 40 ändert sich der Öffnungsquerschnitt des Ventils 16 laufend zwischen offen und geschlossen. Bei der Modulation nach Figur 4b ist die Modulation periodisch, so dass sich ein mittleres Saugvermögen und damit eine mittlere Empfindlichkeit ergibt. Bei der Modulation nach Figur 4a haben die in Richtung "auf" gerichteten Schwingungen eine größere zeitliche Dauer als die in Richtung "zu" gerichteten Schwingungen. Die mittlere Öffnungszeit des Ventils 16 und damit das Saugvermögen sind relativ groß, die Empfindlichkeit gering. Bei der Modulation nach Figur 4c ist das Zeitverhalten umgekehrt, das heisst, die mittlere Öffnungszeit und damit das Saugvermögen sind relativ klein, die Empfindlichkeit der mit diesen Modulationseigenschaften durchgeführten Lecksuche ist hoch.

Die Figuren 3 und 4 zeigen nur zwei von vielen Pulsformen, mit denen die gewünschten Ziele erreicht werden können. Wesentlich ist, dass die Modulationseigenschaften mit Hilfe elektronischer Mittel so gewählt werden können, dass zum einen sowohl die gewünschte Modulation des einströmenden, auf Testgas zu untersuchenden Gasstromes erreicht wird und zum anderen der mittlere Öffnungsquerschnitt des Ventils 16 stufenlos oder in Stufen (und damit das am Einlass wirksame Saugvermögen der Vakuumpumpen) einstellbar ist. Um einen Heliumlecksucher der erfindungsgemäßen Art betreiben zu können, wird eine Kalibrierkurve ermittelt. Sie gibt die relative Empfindlichkeit in Abhängigkeit vom effektiven Saugvermögen an. Die Kalibrierkurve wird zur Bildung eines korrekten Messsignals herangezogen. Dieses ist notwendig, da sich bei einer bestimmten Leckrate verschiedene, von den Modulationseigenschaften abhängige Messwerte ergeben.

Zur Durchführung eines Lecksuchverfahrens mit einem Heliumlecksucher nach Figur 1 wird zunächst der auf Lecks zu untersuchende Prüfling an den Einlass 2 angeschlossen und bei offenen Ventilen 14 und 16 sowie geschlossenen Ventilen 8, 13 mit Hilfe der Vorvakuumpumpe 9 evakuiert. In bekannter Weise kann sich daran zunächst eine Groblecksuche anschliessen, die möglich wird, wenn der Druck einen solchen Wert erreicht hat, dass das Ventil 8 geöffnet werden kann. Ist der Prüfling nicht grob leck, werden das Ventil 14 geschlossen, das Ventil 13 geöffnet und der einströmende Gasstrom mit Hilfe des Ventils 16 moduliert. Die Modulationseigenschaften werden entweder einmalig so gewählt, dass sie einer gewünschten Empfindlichkeit entsprechen. Unmittelbar nach dem Umschalten der Ventile 13 und 14 beginnt dann die Lecksuche mit der vorgegebenen Empfindlichkeit.

Eine andere Möglichkeit besteht darin, dass die Empfindlichkeit der Lecksuche mit zunehmender Messzeit kontinuierlich gesteigert wird. Das geschieht dadurch, dass die Modulationseigenschaften zunächst so gewählt werden, dass mit großem Saugvermögen und geringer Empfindlichkeit gearbeitet wird. Danach werden die Modulationseigenschaften, z.B. stufenlos, derart verändert, dass von dem relativ großen Saugvermögen mit geringer Empfindlichkeit zu geringem Saugvermögen mit hoher Empfindlichkeit übergegangen wird. Wird zu irgendeinem Zeitpunkt zwischen Groblecksuche, Feinlecksuche mit geringer Empfindlichkeit und Feinlecksuche mit hoher Empfindlichkeit Testgas registriert, ist der Prüfling leck. Der Lecksuchvorgang wird unterbrochen. Die Leckfindung hat in optimal kurzer Messzeit stattgefunden.

Für den Fall, dass der durch das Ventil 16 hindurchtretende Gasstrom einen Heliumuntergrund hat, kann als Stellgröße für eine stufenlose Veränderung der Modulationseigenschaften das vom Massenspektrometer 4 abgegebene Signal herangezogen werden. Bei einem dichten Prüfling entsprechen die vom Massenspektrometer 4 abgegebenen Signale dem im zu untersuchenden Gasstrom enthaltenen Heliumuntergrund. Mit zunehmender Messzeit nimmt die Größe der Signale ab. Solange eine vorgebene Signalgröße noch nicht unterschritten wird, werden die Modulationseigenschaften nicht verändert, so dass ein anfänglich hohes effektive Saugvermögen beibehalten wird. Erst wenn die Signalgröße einen vorgegebenen Wert unterschreitet, werden die Modulationseigenschaften derart verändert, dass das effektive Saugvermögen ab- und damit die Empfindlichkeit zunimmt. Bei dichtem Prüfling wird die Lecksuche nach dem Erreichen der gewünschten Empfindlichkeit beendet. Wird im Laufe des Lecksuchverfahrens festgestellt, dass der Prüfling leck ist, erfolgt diese Leckfindung stets innerhalb optimal kurzer Zeit.

Beim Ausführungsbeispiel nach Figur 2 befindet sich das Ventil 16 in der Leitung 11, die mit dem Zwischenanschluss 16 verbunden ist. Diese Anordnung erlaubt ein frühes gedrosseltes Öffnen des Ventils 16, um mit Hilfe der Spiralpumpe 6" das bei Enddruck relativ schlechte Saugvermögen der Membranpumpe 9 zu unterstützen. Außerdem ist die Leitung 3 frei vom Ventil 16, so dass es die Evakuierung des Prüflings über die Leitung 3 vor dem Beginn der Lecksuche nicht behindert.

An die Leitung 7 ist ein Druckmessgerät 32 angeschlossen. Es liefert seine Messsignale an das Steuergerrät 21, das u.a. das Ventil 16 steuert. Es kann dadurch ein zu frühes oder zu weites Öffnen des Ventils 16 verhindert werden, was einen den Betriebsdruck des Massenspektrometers übersteigenden Druck zur Folge haben könnte. Ein den gleichen Zweck erfüllendes Druckmessgerät kann auch am Zwischenanschluss 31 angeschlossen sein.

Der Druck im Bereich des Einlasses 2 des Heliumlecksuchers 1 wird ebenfalls vom Steuergerät 21 überwacht. Das dort angeordnete Druckmessgerät 33 liefert seine Signale an das Steuergerät 21. Der Einlassdruck darf eine bestimmte Schwelle nicht überschreiten. Dieses könnte eintreten, wenn das Saugvermögen mit Hilfe des Ventiles 16 zwecks Erhöhung der Empfindlichkeit zu schnell reduziert wird.

## Patentansprüche

1. Verfahren zum Betrieb eines Heliumlecksuchers (1) mit einem Heliumdetektor (4), mit Evakuierungseinrichtungen, die mindestens eine Hochvakuumpumpe (6) und eine Vorvakuumpumpe (9) umfassen, sowie mit einem Ventil (16), dessen Leitwert einstellbar ist und das der Modulation des hindurchtretenden, auf Testgas zu untersuchenden Gasstromes dient, **dadurch gekennzeichnet, dass** die Modulationseigenschaften veränderbar sind, und zwar derart, dass mit einer Veränderung der Modulationseigenschaften das effektive Saugvermögen am Einlass des Lecksuchers verändert wird.

2. Verfahren nach Anspruch 1, **dadurch gekennzeichnet, dass** die gewünschte Empfindlichkeit vor der Durchführung der Lecksuche an einem oder mehreren identischen Prüflingen durch die Wahl bestimmter Modulationseigenschaften eingestellt wird.

3. Verfahren nach Anspruch 1, **dadurch gekennzeichnet, dass** die Lecksuche an einem Prüfling mit zunehmender Empfindlichkeit durchgeführt wird.

4. Verfahren nach Anspruch 3, **dadurch gekennzeichnet, dass** sich die Empfindlichkeit automatisch verändert.

5. Verfahren nach Anspruch 3 oder 4, **dadurch gekennzeichnet, dass** als Stellgröße für die Veränderung der Modulationseigenschaften das vom Massenspektrometer gelieferte Signal verwendet wird, dessen Größe bei noch nicht registriertem Leck vom Heliumuntergrund im zu untersuchenden Gasstrom abhängt.

6. Verfahren nach Anspruch 5, **dadurch gekennzeichnet, dass** anfänglich mit relativ geringer Empfindlichkeit gearbeitet wird, dass die die Empfindlichkeit bestimmenden Modulationseigenschaften solange nicht verändert werden, bis das vom Massenspektrometer gelieferte, mit zunehmender Messzeit bezüglich seiner Größe abnehmende Signal eine vorgegebene Signalgröße erreicht, und dass mit dem Unterschreiten der vorgegebenen Signalgröße die Modulationseigenschaften derart verändert werden, dass die Empfindlichkeit zunimmt.

7. Verfahren nach Anspruch 6, **dadurch gekennzeichnet, dass** die Modulationseigenschaften so verändert werden, dass die vorgegebene Signalgröße konstant bleibt.

8. Verfahren nach einem der vorhergehenden Ansprüche, **dadurch gekennzeichnet, dass** während der Durchführung der Lecksuche der Druck im Massenspektrometer (4) mittelbar überwacht wird.

9. Verfahren nach einem der vorhergehenden Ansprüche, **dadurch gekennzeichnet, dass** während der Durchführung der Lecksuche der Druck im Bereich des Einlasses (2) des Heliumlecksuchers (1) überwacht wird.

10. Heliumlecksucher (1) zur Durchführung eines der Verfahren nach den Ansprüchen 1 bis 9 mit einem Heliumdetektor (4), mit Evakuierungseinrichtungen, die mindestens eine Hochvakuumpumpe (6) und eine Vorvakuumpumpe (9) umfassen, sowie mit einem Ventil, dessen Leitwert einstellbar ist und das der Modulation des hindurchtretenden, auf Testgas zu untersuchenden Gasstromes dient, **dadurch gekennzeichnet, dass** der Heliumlecksucher (1) mit Einrichtungen (21) ausgerüstet ist, die eine Veränderung der Modulationseigenschaften in der Weise erlauben, dass sich mit der Veränderung der Modulationseigenschaften das effektive Saugvermögen am Einlass des Lecksuchers verändert.

11. Heliumlecksucher nach Anspruch 10, **dadurch gekennzeichnet, dass** der Testgasdetektor (4) und das Steuergerät (21) miteinander verbunden sind.

12. Heliumlecksucher nach Anspruch 10 oder 11, **dadurch gekennzeichnet, dass** ein Druckmessgerät (32) zur mittelbaren Überwachung des Druckes im Testgasdetektor (4) vorgesehen ist.

13. Heliumlecksucher nach Anspruch 10, 11 oder 12, **dadurch gekennzeichnet, dass** ein Druckmessgerät (33) zur Kontrolle des Einlassdruckes vorhanden ist.

14. Heliumlecksucher nach einem der Ansprüche 10 bis 13, **dadurch gekennzeichnet, dass** eine Turbomolekularvakuumpumpenstufe (6') und eine Spiralpumpenstufe (6") die Hochvakuumpumpe (6) bilden, dass die Vorvakuumpumpe (9) eine Membranvakuumpumpe ist und dass das Ventil (16) an einem Zwischenanschluss (31) zwischen den beiden Hochvakuumstufen (6', 6") angeschlossen ist.

15. Heliumlecksucher nach einem der Ansprüche 10 bis 14, **dadurch gekennzeichnet, dass** das Ventil (16) ein elektrisch ansteuerbares Proportionalventil ist.

## Claims

1. Method of operating a helium leak locator (1) having a helium detector (4), having evacuating devices which comprise at least one high-vacuum pump (6) and a fore-vacuum pump (9), and also having a valve (16), the conductance of which can be set and which serves to modulate the gas current passing through, which is to be examined for test gas, **characterised in that** the modulation properties are variable, namely in such a way that, with a varying of the modulation properties, the effective suction capacity at the inlet of the leak locator is varied.

2. Method according to claim 1, **characterised in that** the desired sensitivity is set before the carrying-out of the search for a leak on one or more identical test specimens by choosing specific modulation properties.

3. Method according to claim 1, **characterised in that** the search for a leak is carried out with increasing sensitivity on a test specimen.

4. Method according to claim 3, **characterised in that** the sensitivity varies automatically.

5. Method according to claim 3 or 4, **characterised in that** the signal which is supplied by the mass spectrometer and the magnitude of which depends, in the case of a leak which has not yet been registered, on the helium background in the gas flow to be examined, is used as the regulation variable for varying the modulation properties.

6. Method according to claim 5, **characterised in that** work is initially carried out with relatively low sensitivity, that the modulation properties which determine the sensitivity are not varied until the signal supplied by the mass spectrometer, which signal decreases with respect to its magnitude as the measuring time increases, reaches a predetermined signal quantity, and that, when there is a fall below the predetermined signal quantity, the modulation properties are varied in such a way that the sensitivity increases.

7. Method according to claim 6, **characterised in that** the modulation properties are varied in such a way that the predetermined signal quantity remains constant.

8. Method according to one of the preceding claims, **characterised in that** the pressure in the mass spectrometer (4) is monitored indirectly during the carrying-out of the search for a leak.

9. Method according to one of the preceding claims, **characterised in that** the pressure in the region of the inlet (2) of the helium leak locator (1) is monitored during the carrying-out of the search for a leak.

10. Helium leak locator (1) for carrying out one of the methods according to claims 1 to 9, having a helium detector (4), having evacuating devices which comprise at least one high-vacuum pump (6) and a fore-vacuum pump (9), and also having a valve, the conductance of which can be set and which serves to modulate the gas current passing through, which is to be examined for test gas, **characterised in that** the helium leak locator (1) is equipped with devices (21) which permit varying of the modulation properties in such a way that, with the varying of the modulation properties, the effective suction capacity at the inlet of the leak locator is varied.

11. Helium leak locator according to claim 10, **characterised in that** the test gas detector (4) and the control instrument (21) are connected to one another.

12. Helium leak locator according to claim 10 or 11, **characterised in that** a pressure-measuring instrument (32) is provided for indirectly monitoring the pressure in the test gas detector (4).

13. Helium leak locator according to claim 10, 11 or 12, **characterised in that** a pressure-measuring instrument (33) is present for checking the inlet pressure.

14. Helium leak locator according to one of claims 10 to 13, **characterised in that** a turbomolecular vacuum pump stage (6') and a spiral pump stage (6") form the high-vacuum pump (6), that the fore-vacuum pump (9) is a diaphragm vacuum pump, and that the valve (16) is connected to an intermediate connection (31) between the two high-vacuum stages (6', 6").

15. Helium leak locator according to one of claims 10 to 14, **characterised in that** the valve (16) is an electrically activatable proportional valve.

## Revendications

1. Procédé de fonctionnement d'un dispositif de détection de fuite d'hélium (1) comprenant un détecteur d'hélium (4), des dispositifs d'évacuation qui comprennent au moins une pompe à vide poussé (6) et une pompe à vide préliminaire (9), ainsi qu'une soupape (16) dont la conductance est réglable et qui sert à moduler le flux de gaz de passage devant être examiné du point de vue d'un gaz témoin, **caractérisé en ce que** les propriétés de modulation sont variables, et ceci de manière qu'avec la modification des propriétés de modulation, la capacité d'aspiration effective à l'entrée du dispositif de détection de fuite soit modifiée.

2. Procédé selon la revendication 1, **caractérisé en ce que** la sensibilité souhaitée de fuite est réglée avant la mise en oeuvre de la détection sur un ou plusieurs échantillons identiques par la sélection de propriétés de modulation déterminées.

3. Procédé selon la revendication 1, **caractérisé en ce que** la détection de fuite est mise en oeuvre sur un échantillon à sensibilité croissante.

4. Procédé selon la revendication 3, **caractérisé en ce que** la sensibilité varie automatiquement.

5. Procédé selon l'une ou l'autre des revendications 3 et 4, **caractérisé en ce qu'**on utilise, comme variable de réglage pour la modification des propriétés de modulation, le signal fourni par le spectromètre de masse dont l'amplitude dépend du fond d'hélium dans le flux de gaz à examiner lorsque la fuite n'est pas encore enregistrée.

6. Procédé selon la revendication 5, **caractérisé en ce que** l'on travaille pour commencer avec une sensibilité relativement faible, **en ce que** les propriétés de modulation déterminant la sensibilité ne sont pas modifiées jusqu'à ce que le signal fourni par le spectromètre de masse et dont l'amplitude décroît plus le temps de mesure augmente, atteint une amplitude de signal prédéterminée, et **en ce que** lorsque l'on passe au-dessous d'une amplitude de signal prédéterminée, les propriétés de modulation sont modifiées de telle sorte que la sensibilité augmente.

7. Procédé selon la revendication 6, **caractérisé en ce que** les propriétés de modulation sont modifiées de telle sorte que l'amplitude de signal prédéterminée reste constante.

8. Procédé selon l'une quelconque des revendications précédentes, **caractérisé en ce que** pendant la mise en oeuvre de la détection de fuite, la pression dans le spectromètre de masse (4) est indirectement surveillée.

9. Procédé selon l'une quelconque des revendications précédentes, **caractérisé en ce que** pendant la mise en oeuvre de la détection de fuite, la pression dans la région de l'entrée (2) du dispositif de détection de fuite d'hélium (1) est surveillée.

10. Dispositif de détection de fuite d'hélium (1) pour mettre en oeuvre un procédé selon les revendications 1 à 9, comprenant un détecteur d'hélium (4), des dispositifs d'évacuation qui comprennent au moins une pompe à vide poussé (6) et une pompe à vide préliminaire (9), ainsi qu'une soupape (16) dont la conductance est réglable et qui sert à moduler le flux de gaz de passage devant être examiné du point de vue d'un gaz témoin, **caractérisé en ce que** le dispositif de détection de fuite d'hélium (1) est équipé de dispositifs (21) qui permettent une modification des propriétés de modulation de telle sorte qu'avec la modification des propriétés de modulation la capacité d'aspiration effective à l'entrée du dispositif de détection de fuite soit modifiée.

11. Dispositif de détection de fuite d'hélium selon la revendication 10, **caractérisé en ce que** le détecteur de gaz témoin (4) et l'appareil de commande (21) sont reliés l'un à l'autre.

12. Dispositif de détection de fuite d'hélium selon l'une ou l'autre des revendications 10 et 11, **caractérisé en ce qu'**un appareil de mesure de pression (32) est prévu pour surveiller indirectement la pression dans le détecteur de gaz témoin (4).

13. Dispositif de détection de fuite d'hélium selon l'une ou l'autre des revendications 10, 11 et 12, **caractérisé en ce qu'**un appareil de mesure de pression (33) est prévu pour contrôler la pression d'admission.

14. Dispositif de détection de fuite d'hélium selon l'une quelconque des revendications 10 à 13, **caractérisé en ce qu'**un étage de pompe à vide turbomoléculaire (6') et un étage de pompe spirale (6") forment la pompe à vide poussé (6), **en ce que** la pompe à vide préliminaire (9) est une pompe à vide à diaphragme, et **en ce que** la soupape (16) est raccordée à un raccord intermédiaire (31) entre les deux étages de vide poussé (8', 6").

15. Dispositif de détection de fuite d'hélium selon l'une quelconque des revendications 10 à 14, **caractérisé en ce que** la soupape (16) est une soupape proportionnelle à commande électrique.
